# EUROPEAN PATENT SPECIFICATION

(11) **EP 2 819 417 B1**
(45) Date of publication and mention of the grant of the patent: **04.03.2020**
(21) Application number: 13173360.2
(22) Date of filing: 24.06.2013
(51) Int. Cl.: H04N 21/2343, H04L 29/06, H04N 21/61, H04N 21/643, H04N 21/845

(54) **Method and device for streaming video from a server based on expected usages**
Verfahren und Vorrichtung für das Strömung von Video von einem Server basierend auf den erwarteten Verwendungen
Procédé et dispositif de diffusion vidéo en continu à partir d'un serveur sur la base d'utilisations attendues

(43) Date of publication of application: 31.12.2014
(73) Proprietor: CANON KABUSHIKI KAISHA, Tokyo (JP)
(72) Inventor: Denoual, Franck, 35190 SAINT DOMINEUC (FR); Maze, Frédéric, 35850 LANGAN (FR)
(74) Representative: Santarelli

(56) References cited:
- US-A1- 2012 259 994
- IRAJ SODAGAR: "The MPEG-DASH Standard for Multimedia Streaming Over the Internet", IEEE MULTIMEDIA, IEEE SERVICE CENTER, NEW YORK, NY, US, vol. 18, no. 4, 1 April 2011 (2011-04-01), pages 62-67, XP011378371, ISSN: 1070-986X, DOI: 10.1109/MMUL.2011.71

## Description

The present invention concerns a method and a device for streaming video from a server to be rendered in a Web page by a Web client. More particularly it concerns the adaptive streaming of video for a page having two different display windows dedicated to render videos for different purposes.

The context of the invention is HTML5 (standing for Hyper Text Markup Language release 5) framework by the W3C (standing for World Wide Web Consortium) and manifest-based adaptive video streaming as contemplated, for example, in standard initiatives such as HTTP/2.0 (standing for Hyper Text Transfer Protocol release 2.0), DASH (standing for Dynamic Adaptive Streaming over HTTP) described in standard document ISO/IEC 23009-1, Apple (registered trademark) HLS (standing for HTTP Live Streaming) or Microsoft (registered trademark) Smooth Streaming.

Adaptive HTTP based video streaming consists in encoding a given video at different bitrates. Each encoded stream is segmented into a plurality of corresponding segments. All the segments are available for downloading using HTTP protocol. A metadata file, typically called a manifest, describes all the available streams with their attributes (size, bitrate and so on). It describes also the location of the streams, namely where to get all the segments of the streams.

US 2012/0259994 A1 discloses a client device that implements HTTP-DASH to receive video streams wherein the client device receives a Media Presentation Description file (MPD) also known as manifest file and chooses from the manifest file a representation of the original video, among others that are described in the MPD file, that complies with the client device's decoding and rendering capabilities.

When a Web client is parsing a Web page and comes through a video to render, it downloads the manifest first. By parsing the manifest it gets all information needed to prepare the rendering and to locate the available streams. Typically, it downloads the first segment of the stream with the lower bitrate and begins the display. According to the actual available bandwidth, the further segments will be chosen in the stream having the highest bitrate fitting the available bandwidth. Typically, bandwidth measurement and adaptation is undertaken for each segment. Accordingly, the video is streamed at the highest possible quality needing low buffering and preventing display stalling. The adaptation is typically undertaken by a software module called adaptation logic.

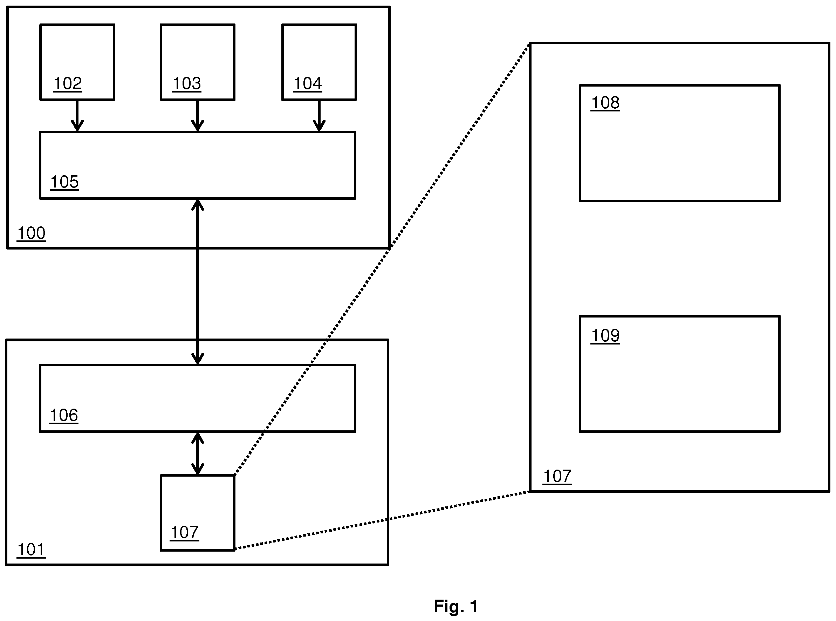

**Figure 1** illustrates the global architecture of a communication system involved in adaptive HTTP based video streaming. A server **100** hosts an HTTP server module **105.** A client **101** hosts a Web client module **106.** The Web client module **106** communicates with the HTTP server module **105** to get Web pages and display the corresponding page **107** on a display of the client **101.** In the context of HTTP based adaptive video streaming, the server hosts some Web pages **102** typically containing some video tag to refer to video content **103** also stored on the server. This video tag refers to at least a manifest file **104** which describes the video content **103** and gives all information on its structure and the location where to get it.

In the DASH standard, herein taken as an example, the manifest file is divided into different time periods typically representing a media content period during which a consistent set of encoded versions of the media content is available. Each period is arranged into adaptation sets. An adaptation set represents a set of interchangeable encoded versions of one or several media content components. An adaptation set contains a set of Representations where a Representation describes a deliverable encoded version of one or several media content components.

The set of information used to describe a particular version of a video within a manifest file is referred to as a Representation in this document, the word "Representation" being capitalized. While the figure represents all the content, Web pages, video content and manifest hosted on a single server, the man skilled in the art understands that the content may be distributed on a plurality of HTTP servers as well. This document focuses on Web pages **107** containing multiple video contents to be rendered in multiple windows **108** and **109** of a same client. It may concern, for example, an application to navigate into super high resolution videos where a thumbnail video is streamed to a first window for control. The user navigates in the control window with an interface to pan and zoom on different parts of the video. When panning and zooming, the corresponding area is then streamed in high quality to the second window. For example the window **108** may be used to control the content streamed in the display window **109.** In that case, the video streamed on the two windows are two different representations of the same original video. We may also cite TV program navigation where the control window displays a mosaic video of the available programs. When the user selects a spatial area of the mosaic, the corresponding program is streamed to the display window. In both cases, the streaming control is let to the client **106.** It can decide which version or Representation from the manifest is to be streamed to each window and can react dynamically to adapt to network variations.

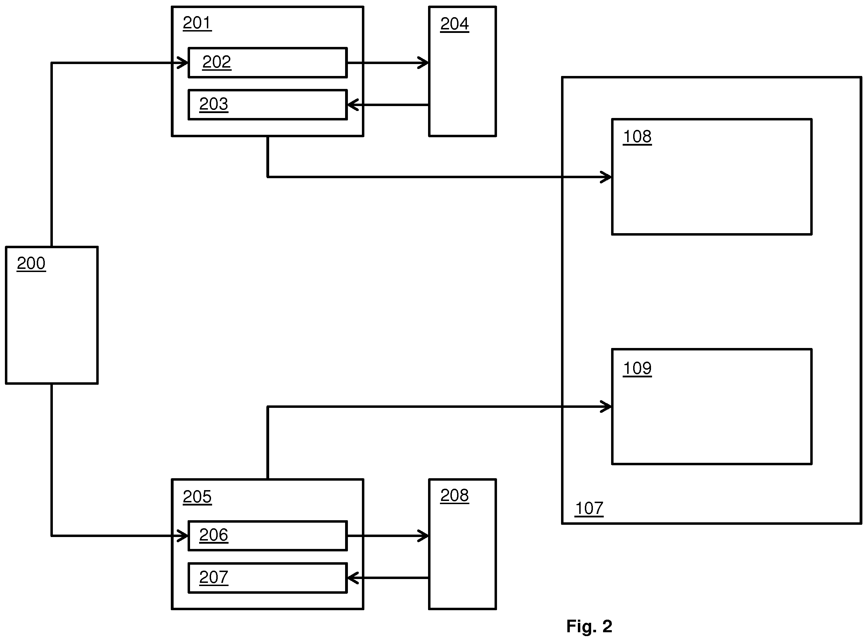

A typical implementation of a client in case of the rendering of a page containing two video windows is described in relation with **figure 2**. The application will launch two independent DASH clients **201** and **205** for the control of each of the display windows **108** and **109.** The DASH client is the module in charge of the parsing of a manifest file **200** corresponding to the description of the video resources available for the streaming of the videos related to the application. In the contemplated application, the video dedicated to the plurality of windows **108** and **109** are typically described in a single manifest file **200.** A typical DASH client comprises a MPD (standing for Media Presentation Description) parser **202** (resp. **206**) used to parse the manifest and to build a representation of the manifest in memory. It also comprises an adaptation logic module, **203** (resp. **207**), used to handle the streaming of the video in the window **108** (resp. **109**). The adaptation logic is in charge of the choice of the right video segments to download based on the available bandwidth, the actual download and the rendering of the video within the window. The internal representation is typically a DOM (standing for Document Object Model) tree used for the manipulation of objects corresponding to XML (standing for Extensible Markup Language) documents in memory. The DASH client **201**, or more precisely the MPD parser **202**, builds its own internal representation **204** of the manifest **200.** While the DASH client **205**, or more precisely the MPD parser **206**, builds the internal representation **208** of the same manifest file **200.**

Each adaptation logic module, **203** and **207**, is then in charge of the control of one window, **108** and **109.** It controls the rendering of the video in the window and the bandwidth adaptation based on the information stored in the internal representation, **204** and **208**, of the manifest. The two adaptation logic modules, **203** and **207**, compete for available bandwidth to feed their respective windows **108** and **109.** The manifest file **200** is parsed by each MPD parser to create as many copies of the internal representation of the manifest, **204** and **208**, in memory. This leads to a waste in bandwidth and memory.

The present invention has been devised to address one or more of the foregoing concerns. It is proposed to add a tag relative to the expected usage associated with a video in the HTML page. This expected usage is used when parsing the manifest file to set constraints on the Representation of the video to be used to render a particular window. A single parsing of the manifest file is undertaken to create a single internal representation. This internal representation of the manifest file is annotated based on the expected usage of the video. The adaptation logic modules compete for the available bandwidth based on these annotations.

The invention is limited only by the appended claims. Embodiments not falling within the scope of the claims should be understood as examples which are useful to understand the invention.

According to a first aspect of the invention there is provided a method for building an internal memory representation of a manifest file corresponding to a video element to be streamed in a Web application, said manifest file describing a plurality of versions of said video element to be streamed, which comprises: determining from annotation in the Web application, the expected usages of the plurality of versions of said video element to be streamed; and annotating the internal memory representation of the manifest file in order to indicate for each version of the video element to be streamed its compliance with the determined expected usages. Accordingly the streaming process may be adapted to the expected usages of a video. It is possible to have several versions of the video streamed to a same application and sharing a same internal representation and streamed based on the constraints adapted to each usage.

In an embodiment, annotating the internal representation comprises for each expected usage: getting a set of constraints associated with the expected usage; building a subset of versions of video data with the version of video data matching the set of constraints; and creating in the internal representation a data structure pointing to said subsets of versions of video element to be streamed. Accordingly, the process of choosing an adapted version is made easier.

In an embodiment, the set of constraints associated with the expected usage is hard coded in the application.

In an embodiment, the set of constraints associated with the expected usage is pre-defined in association with the definition of said expected usage.

In an embodiment, the method further comprises reordering data structure in the internal representation for grouping versions of video element to be streamed belonging to a same subset. Accordingly, the adaptation of the streaming process is made easier and faster because the determination of the appropriate version is limited to the subset of versions and no more to all the versions in the manifest.

In an embodiment, the method further comprises sorting data structure representing versions of video element to be streamed belonging to a same subset according to their bandwidth requirement. Accordingly, the dynamic adaptation (i.e. switching to higher or lower version from one segment to another) of the streaming process is made easier and faster.

According to another aspect of the invention there is provided a method for displaying video data corresponding to at least one version of a same video element to be streamed from a Web application, said video element to be streamed being described in a manifest file, which comprises obtaining the manifest file from the address contained in the Web application; building an annotated internal memory representation of said manifest file according to the invention; initializing at least one adaptation logic module taking in charge the streaming of the video element to be streamed with information representative of the expected usage corresponding to said video element to be streamed; and streaming by the adaptation logic module said video element to be streamed for display.

In an embodiment, the method further comprises determining periodically by the adaptation logic module, during the streaming, the version of said video element to be requested for streaming and display in the subset of versions of video data.

In an embodiment, the streaming is restrained to the version of video element to be streamed belonging to the subset of versions of video data and having the lowest bandwidth requirement when at least one other window of the Web page is active.

In an embodiment, the streaming is restrained to the versions of video element to be streamed belonging to the subset of versions of video data with the lower bandwidth requirement. Accordingly, less processing power is required since no adaptation decision has to be computed.

According to another aspect of the invention there is provided a method for building a second manifest file from a first manifest file, wherein the method comprises: building an annotated internal memory representation of the first manifest file according to the invention; and parsing the annotated internal memory representation of the first manifest file to build the second manifest file; said second manifest file being annotated accordingly in order to identify for each version of video data the associated expected usage. Accordingly, a manifest file including the annotation may be built thus facilitating the adaptation process for future streaming clients using this second manifest.

In an embodiment, the second manifest is compliant with the ISO/IEC 23009-1:2012 (MPEG DASH) media presentation description and the annotation is done using ISO/IEC 23009-1:2012 (MPEG DASH) descriptor.

In an embodiment, the ISO/IEC 23009-1:2012 (MPEG DASH) descriptor is a new Role element.

In an embodiment, the ISO/IEC 23009-1:2012 (MPEG DASH) descriptor is a standard Role element with new values.

In an embodiment, the annotation is inserted as a new attribute of AdaptationSet element of the media presentation description

In an embodiment, the second manifest comprises for each subset of versions of video data values representative of priorities of the Representation elements of the media presentation description.

According to another aspect of the invention there is provided a device for building an internal memory representation of a manifest file corresponding to a video element to be streamed in a Web application, said manifest file describing a plurality of versions of said video element to be streamed, which comprises: a determination module for determining from annotation in the Web application, the expected usages of the plurality of versions of said video element to be streamed; and an annotating module for annotating the internal memory representation of the manifest file in order to indicate for each version of the video element to be streamed its compliance with the determined expected usages.

In an embodiment, the annotating module comprises for each expected usage: a getting module for getting a set of constraints associated with the expected usage; a building module for building a subset of versions of video data with the version of video data matching the set of constraints; and a creating module for creating in the internal representation a data structure pointing to said subsets of version of video element to be streamed.

In an embodiment, the set of constraints associated with the expected usage is hard coded in the application.

In an embodiment, the set of constraints associated with the expected usage is pre-defined in association with the definition of said expected usage.

In an embodiment, the device further comprises a reordering module for reordering data structure in the internal representation for grouping versions of video element to be streamed belonging to a same subset.

In an embodiment, the device further comprises a sorting module for sorting data structure representing versions of video element to be streamed belonging to a same subset according to their bandwidth requirement.

According to another aspect of the invention there is provided a device for displaying video data corresponding to at least one version of a same video element to be streamed from a Web application, said video element to be streamed being described in a manifest file, which comprises an obtaining module for obtaining the manifest file from the Web application; a building module for building an annotated internal memory representation of said manifest file according to the invention; an initializing module for initializing at least one adaptation logic module taking in charge the streaming of the video element to be streamed with information representative of the expected usage corresponding to said video element to be streamed; and a streaming module for streaming by the adaptation logic module said video element to be streamed for display.

In an embodiment, the streaming module comprises a restraining module for restraining the streaming to the versions of video element to be streamed belonging to the subset with the lower bandwidth requirement.

In an embodiment, the streaming module comprises a restraining module for restraining the streaming to the versions of video element to be streamed belonging to the subset with the lower bandwidth requirement when at least one other window of the Web page is active.

According to another aspect of the invention there is provided a device for building a second manifest file from a first manifest file, which comprises a building module for building an annotated internal memory representation of the first manifest file according to the invention; and a parsing module for parsing the annotated internal memory representation of the first manifest file to build the second manifest file; said second manifest file being annotated accordingly in order to identify for each version of video data the associated expected usage.

According to another aspect of the invention there is provided a computer program product for a programmable apparatus, the computer program product comprising a sequence of instructions for implementing a method according to the invention, when loaded into and executed by the programmable apparatus.

According to another aspect of the invention there is provided a computer-readable storage medium storing instructions of a computer program for implementing a method according to the invention.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the present invention may take the form of a computer program product embodied in any tangible medium of expression having computer usable program code embodied in the medium.

Since the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

Embodiments of the invention will now be described, by way of example only, and with reference to the following drawings in which:
**Figure 1** illustrates the global architecture of a communication system involved in adaptive HTTP based video streaming;
**Figure 2** illustrates a typical implementation of a client in case of the rendering of a page containing two video display windows;
**Figure 3** illustrates an implementation of a client in case of the rendering of a page containing two video display windows according to an embodiment of the invention;
**Figure 4** illustrates the main steps of the process for parsing a Web page according to an embodiment of the invention;
**Figure 5** illustrates the main steps of the process for parsing manifest files corresponding to a Web page according to an embodiment of the invention;
**Figure 6** illustrates the main steps of the process for analysing a manifest file according to an embodiment of the invention;
**Figure 7** illustrates the main steps of the process for annotating the internal representation of a manifest file according to an embodiment of the invention;
**Figure 8** illustrates the main steps of the process for streaming a video according to an embodiment of the invention;
**Figure 9** is a schematic block diagram of a computing device for implementation of one or more embodiments of the invention.

The idea of the invention is to associate with each video declared in the Web page an expected usage from the application point of view. Another point is to have a specific module in the DASH client that will consider this video annotation tag during the MPD parsing to classify the different parts of the MPD as suitable for one or another display window of the application. For that, the invention performs as follows relying on both "expected usage" tag and specific MPD analyzer. The client loads the Web page and parses it, especially the video tags with their declared "expected usage". The client gets the URL of the manifest (i.e. the MPD) from the Web page, downloads and parses it. This results in the generation of an in-memory representation of the manifest (typically, a DOM tree since MPD is a manifest file).

For each video and its usage, the client analyses the compatibility of the different representations described in the manifest. This results in annotation regarding suitability with the declared "expected usages" of the different parts of the in-memory representation of the manifest (DOM tree Annotation). During the streaming and play of the video, the client uses the annotations to decide which media segments from which representation to download.

Accordingly, each adaptation logic module has an indication of the suitable Representation of the video that fit the expected usage. For example, a control video is restricted to use very high quality Representations of the video. This allows for a distribution of the available bandwidth according to the expected use of each video. Moreover, a single internal representation of the manifest is built thus saving memory. By reducing the number of Representation to consider for the rendering, the adaptation algorithm is also made simpler, thus saving processing resources.

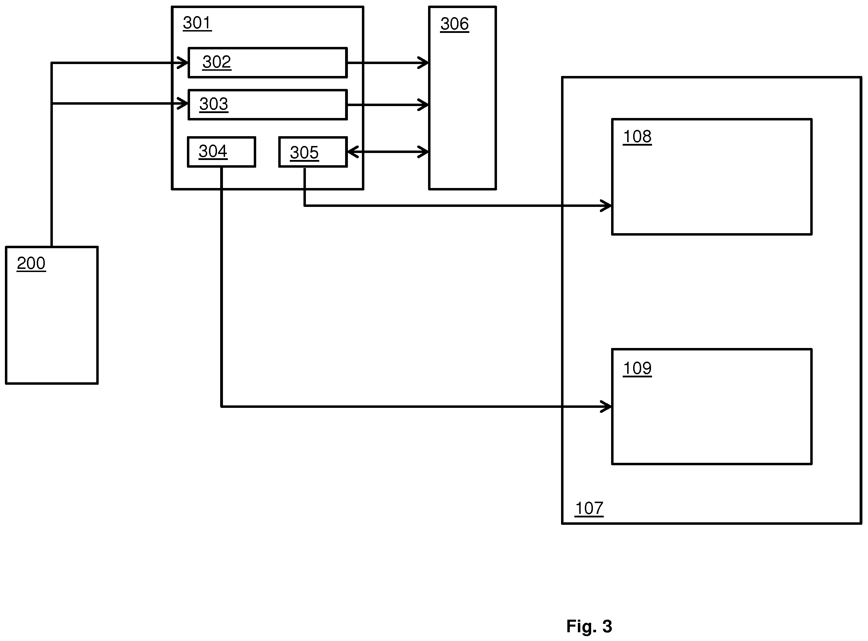

**Figure 3** illustrates an implementation of a client in case of the rendering of a page containing two video windows according to an embodiment of the invention. A single DASH client **301** is initiated for the control of a Web page **107** containing at least two video windows **108** and **109.** The Web page is downloaded from a server and includes the declaration of the two windows and of the associated video with the URL (standing for Universal Resource Location) of the associated manifest file **200.** The DASH client **301** includes a MPD parser **302** used for the parsing of the manifest file **200.** From this manifest file the MPD parser **302** creates the internal representation **306** of this manifest. According to this embodiment of the invention, the DASH client also includes a MPD analyser **303.** From the manifest and from the expected usage tag obtained from the Web page the MPD analyser **303** annotates the internal representation **306** of the manifest. Its main action is to parse all the Representation available for a given video to select the one matching the constraints associated with the expected usage for this video. The internal representation of the manifest is enriched with, for each window to be controlled, a list of the matching Representations that fit the expected usage associated with this window. Advantageously, the MPD analyser **303** may also reorder the video Representations within the data structure of the internal representation of the manifest to speed up access to the matching Representations. The DASH client **301** also includes adaptation logic modules **304** and **305** in charge of the control and the streaming of video for the windows **108** and **109.** These adaptation logic modules use the annotated internal representation **306** of the manifest for their adaptation processes.

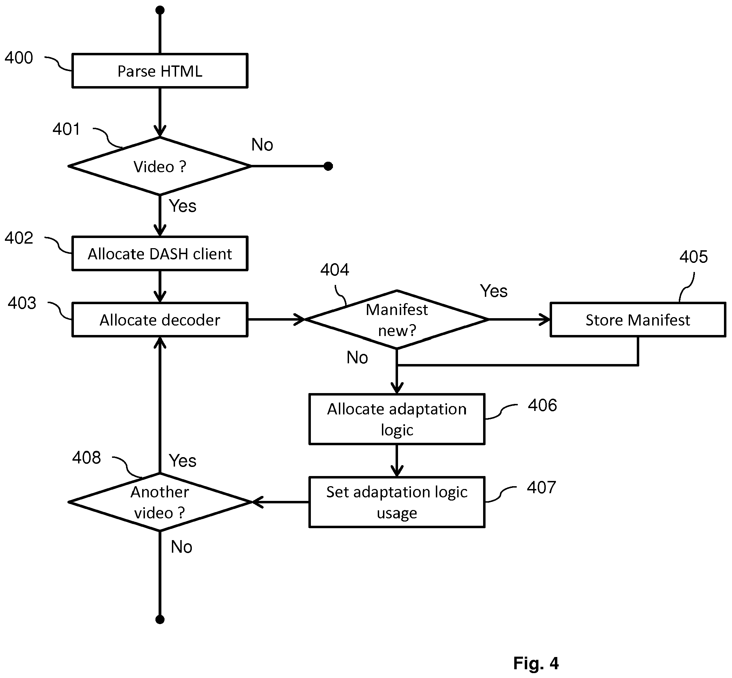

**Figure 4** illustrates the main steps of the process for parsing a Web page according to an embodiment of the invention. In a step **400**, the streaming client downloads the Web page containing the declaration of the windows and associated videos. The Web page may also include application code, for example written in the scripting language "javascript", coding the DASH client. Alternatively, the code for the DASH client may be resident in the client device. The streaming client parses the HTML page downloaded for rendering it. During the parsing the streaming client may come across a video element in a step **401.** If no video element is present in the page, the process is stopped until the download of another page. If a first video element is detected, a DASH client is allocated in a step **402.** A new video decoder with its associated buffers is associated in a step **403** to deal with the video decoding associated with this video element. The data will be passed from the DASH client to the decoder using typically the MSE (standing for Media Source Extension) application programming interface. This API (standing for Application Programming Interface) implemented in the Web client provides a buffering model to add and remove media segments into a buffer at application level (the level of the DASH client), and to append data to internal buffers of the decoder. The video elements are declared in the Web page by a tag <video> that contains a "src" attribute pointing to a manifest file, for example a MPD document. An example of such a tag is:
<video src=http://my_server.com/manifest.mpd ... >.

In a step **404**, it is tested if the current manifest in the "src" attribute has not already been encountered during the parsing. If it has not, it is appended to a list of manifests maintained by the streaming client in a step **405.** Next, a new adaptation logic module is allocated in the DASH client to handle this particular video element in a step **406.** The next step consists in parsing in the current video tag the value for the expected use attribute at step **407**, for example:
<video .... use="preview"...>.

Note that currently, the "use" attribute does not exist for video tag and the "use" name for this attribute is an example. In addition, the acceptable values for such attributes could be defined for example in a XML schema. The obtained value is provided to the latest allocated adaptation logic module as well as the source buffer of the Media Source Extension allocated. At the same time, a reference to the current manifest is also recorded with the current adaptation logic. The last parameters associated with the adaptation logic are potential sizes (width, height) declared with video tag.

After this initialization of the adaptation logic module, it is tested if another video tag is to be found in the Web page in step **408.** If this is the case, control loops on the steps already described until the test **408** returns false. The **figure 4** process corresponds to the initialization steps of the DASH client resulting from the HTML5 Web page parsing.

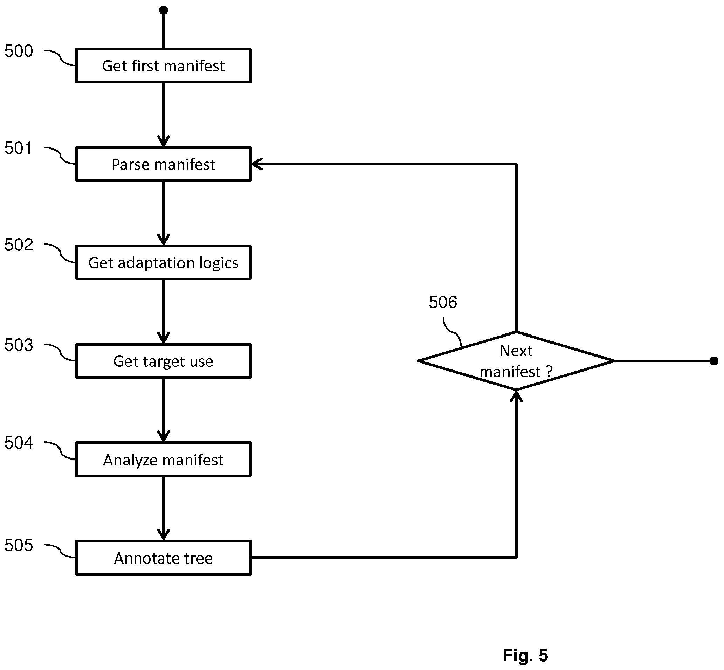

**Figure 5** illustrates the main steps of the process for parsing manifest files corresponding to a Web page according to an embodiment of the invention. Once the HTML5 parsing is done, the DASH client starts the MPD parsing and analysis. This is done typically by the MPD parser module **302** and the MPD analyser module **303** on **figure 3****.** It is worth noting that the parsing and the analysis of the MPD files have been described by two different modules, respectively **302** and **303,** on **figure 3****,** but these functions may be implemented by a single module undertaking parsing and analysis in a nested way.

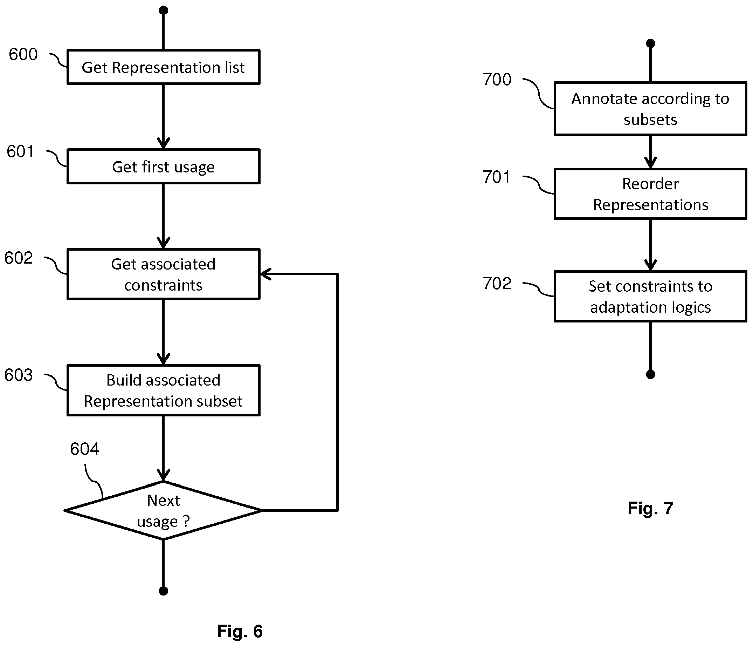

In a first step **500**, the parser gets the first manifest file from the list constituted at step **405** on **figure 4****.** Starting with this first manifest, in step **501**, the MPD parser builds an in-memory representation for this manifest, for example a DOM Tree representing the MPD structure. Once built, the in-memory representation is shared among the adaptation logic modules allocated in the DASH client. This can be done since, for each allocated adaptation logic module, a reference to the corresponding manifest to use has been recorded in step **407** of **figure 4****.** Then a list of adaptation logic modules for the current manifest can be obtained in step **502.** From this list, the MPD analyzer gets at step 503 the target usages associated with each adaptation logic module also recorded at step **407** of **figure 4****.** The MPD analyzer is then ready to proceed to the MPD analysis in **504.** This step is described in detail in **figure 6****.** The results of this analysis are exploited in step **505** to annotate the in-memory representation of the MPD. This consists in adding a code under each in-memory representation of a MPD Representation. We remind that the wording "Representation" is used for the set of information describing a particular version of video within a MPD file. This code indicates the suitability of the MPD Representation with respect to the possible target usages identified in **503.** For example, if two different usages have been identified, a simple 2-bit code is necessary to indicate the suitability with none, first, second or both of these usages. In addition to the annotation, the results can be used at same step **505** to provide constraints to the adaptation logic modules. These constraints may consist in bounds to the size of the video or to the bitrate to fit the expected usage.

As an example, for adaptation logic modules that compute their decision on bitrate values, the minimum available bitrate in the subset of suitable Representations for the associated target usage is provided. The max available bitrate can also be provided and also a list of possible bitrate values. For each bitrate value, a link to the corresponding MPD Representation in the in-memory representation can be provided. This will simplify the decision process to choose a Representation and the start of streaming. More generally, each adaptation logic module can inform the MPD analyzer of the criteria (or combination of criteria) considered for its decision computation. As criteria example, we can cite: *contentType, picture aspect ratio, sample aspect ratio, codecs, bandwidth, width, height, frameRate, qualityRanking...* attributes that may be present in the manifests. By doing so, the analyzer can send back to the adaptation logic module either bounds for the considered criteria and even fix some values for one or more criterion so that decisions can be simplified in terms of criteria combinations: for example, width, height criteria can be fixed and bounds can be set to bandwidth criterion for a given usage.

Finally, after the annotation step **505**, the DASH client checks during step **506** whether other manifests have to be processed from the list. If it is the case, the DASH client iterates on **501-505** until no more manifest have to be processed.

**Figure 6** illustrates the main steps of the process for analysing a manifest file according to an embodiment of the invention. This process corresponds to step **504** on **figure 5****.** In a first step **600** the list of all video Representation included in the manifest is gathered. This step is typically done during the parsing of the manifest file or it may be done by running through the internal representation of this manifest. Next for each usage declared in the Web page and associated with adaptation logic module in the DASH client a subset of video Representations that are suitable with respect to this usage is determined from the complete Representation list.

In a step **601** the first usage is obtained. Next, in a step **602**, some constraints associated with this usage are obtained. These constraints may be hard coded in the application or they may be obtained from an external file defining the different usage with their associated constraints. This external file may be typically an XML file, for example instantiated from an XML schema or any model or template document. These constraints comprise bounds to the size, height and width, of the video, bounds on the suitable bitrate and framerate. It may also comprise acceptable or forgiven encoding mode like, for example, scalable video Representation.

As an example, constraints for a usage corresponding to a control window may be as follow, scalable Representations are discarded, too big Representations (in terms of spatial resolution and/or bitrate) are also discarded, meaning that all Representations with a bit rate higher than a given threshold are discarded. Representations with a frame rate higher than a given threshold are also discarded. Additionally, an estimate of the bandwidth may be determined during the download of the Web page. A constraint may consist in discarding the Representations with a bit rate higher than this estimate.

As another example, constraints for a usage corresponding to a high quality display usage may be as follow. Too small Representation may be discarded. Small would be interpreted as small in spatial resolution dimensions, namely height and width. It may be also interpreted as small in bit rate or frame rate. Scalable Representation will be kept. Additionally, a new Representation may be built based on the base layer of the scalable Representation. This Representation is likely to fit the constraints for a usage corresponding to a control window. This new Representation may be then added to the Representation subset associated with the control usage.

In a step **603** the video Representation list is run through to build the Representation subset associated with the current usage. Each video Representation is tested against the constraints related to the usage. If the video Representation matches the constraints it is added to the Representation subset. If not, it is discarded. If some usage last, step **604**, the control loops back to step **602** to build the Representation subset associated with the next usage.

**Figure 7** illustrates the main steps of the process for annotating the internal representation of a manifest file according to an embodiment of the invention. This process corresponds to step **505** on **figure 5****.** In a step **700**, the internal representation of the manifest is annotated according to the built subset. It consists in associating the video Representation present in the internal representation of the manifest to the expected usage they match. A practical manner to do it may be, for example, to store the video Representation subsets in the internal representation of the manifest. For each usage, a list of suitable Representation is built pointing to the existing data structure corresponding to the Representation present in the subset. Accordingly, a parsing of the whole video Representation list is not needed when searching for a Representation that matches a particular usage.

Advantageously, the video Representation stored in the internal representation of the manifest may be reordered in a step **701.** This reordering aims at grouping together the video Representation belonging to a same subset. Accordingly, this allows reducing the memory jump when accessing to the URL for the download of the video segments. Advantageously, the video Representation in the subset list may be sorted according to their bandwidth requirement thus facilitating the dynamic switch from one Representation to another. The video Representation requiring the lower bandwidth is placed first in the list.

Depending on the number of video Representation in the subset associated with a given expected usage, the corresponding adaptation logic module is set as switchable or not in a step **702.** If only one video Representation lasts in the subset, there is no need to initiate adaptation. The use of this video Representation is forced. If the subset contains more than one video representation, the corresponding adaptation logic module is set as switchable as adaptation will be needed to fit the actual bandwidth by switching if necessary between the video Representations.

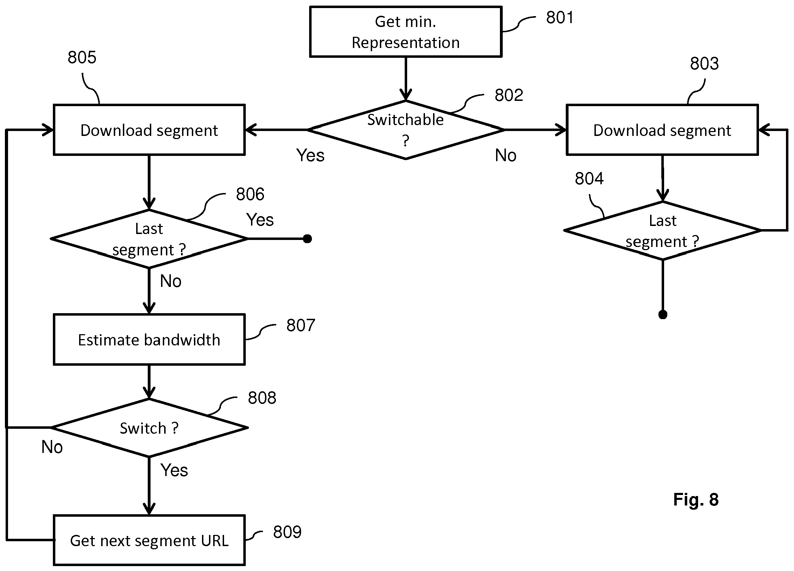

**Figure 8** illustrates the main steps of the process for streaming a video according to an embodiment of the invention. After the initialization step, parsing, analysis and annotating, described above, the DASH client **301** of **figure 3** is responsible for the sending of HTTP requests to the application server in order to get the video segments described in the manifest file **200.** This client behavior is implementation dependent, i.e. it is not described in the DASH standard. The decision on which next segment to download at a given time is let to the client's adaptation logic module. In a step **801**, the adaptation logic module associated with the window targeted for the display of the streamed video gets the minimal video Representation matching the expected usage associated. If the video Representation subset has been reordered, it should be the first video Representation of the subset list corresponding to the expected usage.

Depending on the switchable feature of the adaptation logic module, step **802**, the streaming is undertaken adaptively or not. If the adaptation logic module is not switchable, meaning that only one video Representation matches the expected usage, the adaptation logic module downloads one after the other the segments indicated in this video Representation in steps **803** and **804** without any adaptation to compute or network or device status to monitor

If the adaptation logic module is switchable, the streaming begins with the download of the first segment of the video Representation having the lowest bandwidth requirement in the subset in a step **805.** If this is not the last segment of the video, step **806**, an estimate of the actual available bandwidth is made in step **807.** It is typically made by measurement on the download of the segment done in step **805.** Next, in a step **808**, the actual available bandwidth is compared to the bandwidth requirement of the current video Representation. Depending on this comparison and the availability of other video Representations in the subset a decision to switch to another Representation is made in step **808.** Typically, if another video Representation in the subset has a bandwidth requirement that better fits the actual available bandwidth, a decision to switch to this Representation is made. If a switch decision is made, the URL of the next segment is obtained from the new video Representation in a step **809.** Next, the control loops back to step **805** with the actual download of the next segment.

In some embodiments, in the aim of saving computational resources, the adaptation logic module is prevented to switch. In that case, the video Representation having the minimum bandwidth requirement in the subset is the only Representation allowed for the streaming.

Alternatively, the switch may be only authorized when no other window is active. This means that the streaming is restrained to the video data of the video Representation belonging to the current subset and having the lower bandwidth requirement when at least one other window of the Web page is active.

While in the foregoing embodiments, the manifest file was untouched by the invention. In an alternative embodiment a new manifest file is created. In that embodiment, the invention is used on the server side. More precisely, the Web page parser is used jointly with the MPD parser and analyzer to build the internal representation of the manifest of the server side. As in the invention on the client side, the internal representation is annotated alike (700) and possibly reordered (701). An internal representation of the manifest where all the video Representations are annotated with respect to their expected usage is obtained. Some additional data structures allow retrieving the list of video Representations pertaining to a subset of video Representation corresponding to each expected usage.

Once the annotated internal representation has been obtained, a new manifest file is built from this annotated internal representation by parsing the annotated internal representation. This new manifest file is annotated in order to identify for each video Representation the associated expected usage. It reflects exactly the annotated internal representation.

For example, using the DASH standard, the subset of video Representations corresponding to an expected usage are grouped into particular adaptation sets. These new adaptation sets may be signaled as compliant with the given expected usage by a specific new attribute or by defining a new DASH descriptor type. In the context of the DASH standard, a descriptor comprises a mandatory attribute "schemeldUri" which type is "anyURI" and defined in XML Schema, an optional attribute "value" which type is "string" and extension points for attributes and elements.

Describing the expected usage of a video with the corresponding Representations could be done by defining a new "schemeldUri" to describe the "expected usage" in a Role element defined as a child of the adaptation set element. For example, this new descriptor may be as follow:
<Role schemeldUri="**urn:mpeg:DASH:usage:2011**" value="**control**"/>

The existing schemeldUri=" urn:mpeg:dash:role:2011" could also be used with new values to reflect the expected usages. For example:
<Role schemeldUri="**urn:mpeg:DASH:role:2011**" value="c**ontrol**"/>
Or <Role schemeldUri="**urn:mpeg:DASH:role:2011**" value="**preview**"/>

The parameters that would be allowed for the "value" attribute should match those allowed for the expected usage tag of the video tag in HTML. A common dictionary may be defined by the application developers. In addition, since subset of representations resulting from analysis would then be grouped ++into the same adaptation set, the "qualityRanking" attribute of each Representation could be deduced from the subset building step **603** on **figure 6**. This attribute associated with a Representation is used to specify a quality ranking of this Representation relatively to other Representations in the same adaptation set. Lower values represent higher quality content. Accordingly computing resources are saved client size. A simple parsing of the manifest file allows building the annotated internal representation of the manifest saving of the analysis and annotating burden for the client.

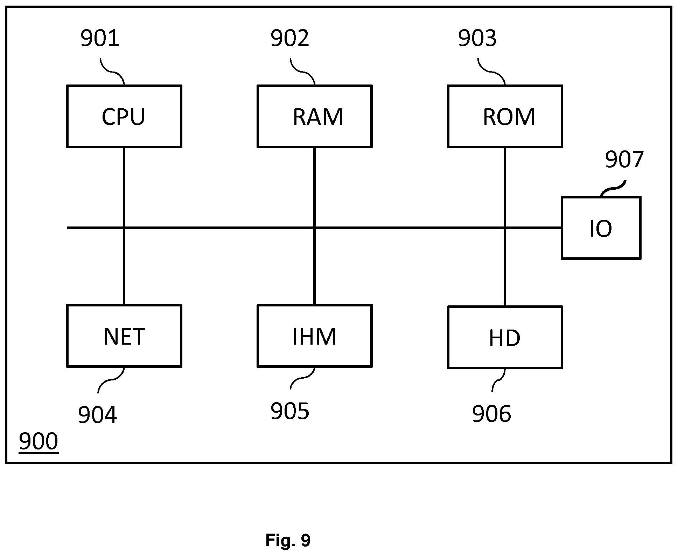

**Figure 9** is a schematic block diagram of a computing device **900** for implementation of one or more embodiments of the invention. The computing device **900** may be a device such as a micro-computer, a workstation or a light portable device. The computing device **900** comprises a communication bus connected to:
- a central processing unit **901**, such as a microprocessor, denoted CPU;
- a random access memory **902**, denoted RAM, for storing the executable code of the method of embodiments of the invention as well as the registers adapted to record variables and parameters necessary for implementing the method for encoding or decoding at least part of an image according to embodiments of the invention, the memory capacity thereof can be expanded by an optional RAM connected to an expansion port for example;
- a read only memory **903**, denoted ROM, for storing computer programs for implementing embodiments of the invention;
- a network interface **904** is typically connected to a communication network over which digital data to be processed are transmitted or received. The network interface **904** can be a single network interface, or composed of a set of different network interfaces (for instance wired and wireless interfaces, or different kinds of wired or wireless interfaces). Data packets are written to the network interface for transmission or are read from the network interface for reception under the control of the software application running in the CPU **901**;
- a user interface **905** may be used for receiving inputs from a user or to display information to a user;
- a hard disk **906** denoted HD may be provided as a mass storage device;
- an I/O module **907** may be used for receiving/sending data from/to external devices such as a video source or display.

The executable code may be stored either in read only memory **903**, on the hard disk **906** or on a removable digital medium such as for example a disk. According to a variant, the executable code of the programs can be received by means of a communication network, via the network interface **904**, in order to be stored in one of the storage means of the communication device **900**, such as the hard disk **906**, before being executed.

The central processing unit **901** is adapted to control and direct the execution of the instructions or portions of software code of the program or programs according to embodiments of the invention, which instructions are stored in one of the aforementioned storage means. After powering on, the CPU **901** is capable of executing instructions from main RAM memory **902** relating to a software application after those instructions have been loaded from the program ROM **903** or the hard-disc (HD) **906** for example. Such a software application, when executed by the CPU **901**, causes the steps of the flowcharts shown in **Figures 4** to **8** to be performed.

Any step of the algorithm shown in **Figure 4** to **8** may be implemented in software by execution of a set of instructions or program by a programmable computing machine, such as a PC ("Personal Computer"), a DSP ("Digital Signal Processor") or a microcontroller; or else implemented in hardware by a machine or a dedicated component, such as an FPGA ("Field-Programmable Gate Array") or an ASIC ("Application-Specific Integrated Circuit").

While being particularly interesting when concurrent streaming occur in the rendering of a two video windows on a single page, the invention is still advantageous in the context of a single video window. Indeed, by restraining the Representation list to a subset of representation matching an expected use, the adaptation process is simplified.

While being described in the context of the DASH standard, the invention adapts straightforwardly to all the neighbor HTTP adaptive streaming standards like Apple HLS and Microsoft Smooth Streaming and alike.

Although the present invention has been described hereinabove with reference to specific embodiments, the present invention is not limited to the specific embodiments, and modifications will be apparent to a skilled person in the art which lie within the scope of the appended claims.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

## Claims

1. A method for streaming video data of a video element embedded in a Web page, said video element being described in a manifest file, wherein the method comprises by a DASH client:
- obtaining the manifest file from an address contained in the Web page, said manifest file describing a plurality of Representations, each Representation describing properties of a corresponding version of the video element;
- building an internal memory representation of the obtained manifest file by:
∘ determining from an annotation associated with the video element embedded in the Web page, the expected usage of said video element, each expected usage being associated with a set of constraints comprising at least bounds on a suitable bitrate and a frame rate;
∘ obtaining the set of constraints associated with each expected usage; and
∘ annotating the internal memory representation of the manifest file by indicating, for each Representation of the video element, its compliance with said constraints associated with the determined expected usage;
- determining a subset of Representations among the Representations of the internal memory representation that complies with the expected usage of said video element; and
- streaming video data associated to a Representation of the subset.

2. The method of claim 1, further comprising:
- initializing an adaptation logic module configured to handle the streaming of video data of the video element, with information representative of the expected usage of said video element;
- wherein the adaptation logic module is configured to select a Representation among the determined subset.

3. The method of claim 2, wherein:
- another video element is embedded in the Web page;
- the internal memory representation comprises further annotated Representations describing properties of versions of the another video element;
- another adaptation logic module is initialized to handle the streaming of video data of the another video element.

4. A method according to claim 1 wherein the method further comprises:
- determining periodically by the adaptation logic module, during the streaming, a version of said video element to be requested for streaming and display in the subset of versions of video data.

5. A method according to anyone claim 1 to 4, wherein the streaming is restrained to the version of video element to be streamed belonging to the subset of versions of video data and having a lowest bandwidth requirement when at least one other window of the Web page is active.

6. A method according to claim 1, wherein the streaming is restrained to the versions of video element to be streamed belonging to the subset of versions of video data with a lowest bandwidth requirement.

7. A method according to any one claim from 1 to 6, the method further comprising for building a second manifest file from the annotated internal memory representation of the manifest file:
- parsing the annotated internal memory representation of the manifest file to build the second manifest file; said second manifest file being annotated accordingly in order to identify for each version of video data the associated expected usage.

8. A method according to claim 7 wherein the annotation is inserted as a new attribute of an AdaptationSet element of the media presentation description

9. A method according to claim 8 wherein the second manifest comprises for each subset of versions of video data values representative of priorities of Representation elements of the media presentation description.

10. A DASH device for streaming video data of a video element embedded in a Web page, said video element being described in a manifest file,
wherein the DASH device comprises a processor configured to execute the steps of:
- obtaining the manifest file from an address contained in the Web page, said manifest file describing a plurality of Representations, each Representation describing properties of a corresponding version of the video element;
- building an internal memory representation of the obtained manifest file by:
∘ determining form an annotation associated with the video element embedded in the Web page, the expected usage of said video element, each expected usage being associated with a set of constraints comprising at least bounds on a suitable bitrate and a frame rate
∘ obtaining the set of constraints associated with each expected usage; and
∘ annotating the internal memory representation of the manifest file by indicating, for each Representation of the video element, its compliance with said constraints associated with the determined expected usage;
- determining a subset of Representations among the Representations of the internal memory representation that complies with the expected usage of said video element; and
- streaming video data associated to a Representation of the subset.

11. A computer program product for a programmable apparatus, the computer program product comprising a sequence of instructions for implementing a method according to any one of claims 1 to 9, when loaded into and executed by the programmable apparatus.

12. A computer-readable storage medium storing instructions of a computer program for implementing a method according to any one of claims 1 to 9.

## Patentansprüche

1. Verfahren zum Streamen von Videodaten eines Videoelements, das in einer Webseite eingebettet ist, wobei das Videoelement in einer Manifestdatei beschrieben ist, wobei das Verfahren durch einen DASH-Client umfasst:
- ein Erlangen der Manifestdatei von einer Adresse, die in der Webseite enthalten ist, wobei die Manifestdatei eine Vielzahl von Darstellungen beschreibt, wobei jede Darstellung Eigenschaften einer entsprechenden Version des Videoelements beschreibt;
- Aufbauen einer internen Speicherdarstellung der erlangten Manifestdatei durch:
- ein Bestimmen der erwarteten Verwendung des Videoelements aus einer Annotation, die mit dem in der Webseite eingebetteten Videoelement assoziiert ist, wobei jede erwartete Verwendung mit einer Menge an Einschränkungen assoziiert ist, die zumindest Grenzen einer geeigneten Bitrate und einer Framerate umfasst;
- ein Erlangen der Menge an Einschränkungen, die mit jeder erwarteten Verwendung assoziiert ist; und
- ein Annotieren der internen Speicherdarstellung der Manifestdatei, indem für jede Darstellung des Videoelements dessen Übereinstimmung mit den Einschränkungen, die mit der bestimmten erwarteten Verwendung assoziiert werden, angegeben werden;
- ein Bestimmen einer Untermenge von Darstellungen unter den Darstellungen der internen Speicherdarstellung, die mit der erwarteten Verwendung des Videoelements übereinstimmt; und
- ein Streamen von Videodaten, die mit einer Darstellung der Untermenge assoziiert werden.

2. Verfahren nach Anspruch 1, umfasst des Weiteren:
- ein Initialisieren eines Adaptionslogikmoduls, das eingerichtet ist, das Streamen von Videodaten des Videoelements handzuhaben, mit Informationen, die für die erwartete Verwendung des Videoelements repräsentativ sind;
- wobei das Adaptionslogikmodul eingerichtet ist, eine Darstellung unter der bestimmten Untermenge zu wählen.

3. Verfahren nach Anspruch 2, wobei:
- ein anderes Videoelement in der Webseite eingebettet ist;
- die interne Speicherdarstellung des Weiteren annotierte Darstellungen umfasst, die Eigenschaften von Versionen des anderen Videoelements beschreiben;
- ein anderes Adaptionslogikmodul initialisiert wird, um das Streamen von Videodaten des anderen Videoelements handzuhaben.

4. Verfahren nach Anspruch 1, wobei das Verfahren des Weiteren umfasst:
- ein periodisches Bestimmen einer Version des Videoelements durch das Adaptionslogikmodul während des Streamens, das für das Streamen und die Anzeige in der Untermenge von Versionen von Videodaten angefordert wird.

5. Verfahren nach einem der Ansprüche 1 bis 4, wobei das Streamen auf die Version des zu streamenden Videoelements beschränkt ist, die zu der Untermenge von Versionen von Videodaten gehört und eine geringste Bandbreitenanforderung aufweist, wenn zumindest ein anderes Fenster der Webseite aktiv ist.

6. Verfahren nach Anspruch 1, wobei das Streamen auf die Versionen des zu streamenden Videoelements beschränkt ist, die zu der Untermenge von Versionen von Videodaten mit einer geringsten Bandbreitenanforderung gehört.

7. Verfahren nach einem der Ansprüche 1 bis 6, wobei das Verfahren des Weiteren zum Aufbauen einer zweiten Manifestdatei aus der annotierten internen Speicherdarstellung der Manifestdatei umfasst:
- ein Parsen der annotierten internen Speicherdarstellung der Manifestdatei, um die zweite Manifestdatei aufzubauen; wobei die zweite Manifestdatei dementsprechend annotiert ist, um für jede Version von Videodaten die assoziierte erwartete Verwendung zu identifizieren.

8. Verfahren nach Anspruch 7, wobei die Annotation als ein neues Attribut eines AdaptionSet-Elements der Medienpräsentationsbeschreibung eingefügt wird.

9. Verfahren nach Anspruch 8, wobei das zweite Manifest für jede Untermenge von Versionen von Videodaten Werte umfasst, die für die Prioritäten der Darstellungselemente der Medienpräsentationsbeschreibung repräsentativ sind.

10. DASH-Vorrichtung zum Streamen von Videodaten eines Videoelements, das in einer Webseite eingebettet ist, wobei das Videoelement in einer Manifestdatei beschrieben ist, wobei die DASH-Vorrichtung einen Prozessor umfasst, der eingerichtet ist, die folgenden Schritte auszuführen:
- ein Erlangen der Manifestdatei von einer Adresse, die in der Webseite enthalten ist, wobei die Manifestdatei eine Vielzahl von Darstellungen beschreibt, wobei jede Darstellung Eigenschaften einer entsprechenden Version des Videoelements beschreibt;
- Aufbauen einer internen Speicherdarstellung der erlangten Manifestdatei durch:
- ein Bestimmen der erwarteten Verwendung des Videoelements aus einer Annotation, die mit dem in der Webseite eingebetteten Videoelement assoziiert ist, wobei jede erwartete Verwendung mit einer Menge an Einschränkungen assoziiert ist, die zumindest Grenzen einer geeigneten Bitrate und einer Framerate umfasst;
- ein Erlangen der Menge an Einschränkungen, die mit jeder erwarteten Verwendung assoziiert ist; und
- ein Annotieren der internen Speicherdarstellung der Manifestdatei, indem für jede Darstellung des Videoelements dessen Übereinstimmung mit den Einschränkungen, die mit der bestimmten erwarteten Verwendung assoziiert werden, angegeben werden;
- ein Bestimmen einer Untermenge von Darstellungen unter den Darstellungen der internen Speicherdarstellung, die mit der erwarteten Verwendung des Videoelements übereinstimmt; und
- ein Streamen von Videodaten, die mit einer Darstellung der Untermenge assoziiert werden.

11. Computerprogrammprodukt für ein programmierbares Gerät, wobei das Computerprogrammprodukt eine Sequenz von Anweisungen umfasst, um ein Verfahren nach einem der Ansprüche 1 bis 9 zu implementieren, wenn es in ein programmierbares Gerät geladen wird und von diesem ausgeführt wird.

12. Computerlesbares Speichermedium, das Anweisungen eines Computerprogramms speichert, um ein Verfahren nach einem der Ansprüche 1 bis 9 zu implementieren.

## Revendications

1. Procédé pour diffuser en continu des données vidéo d'un élément vidéo incorporé dans une page Web, ledit élément vidéo étant décrit dans un fichier de manifeste, dans lequel le procédé comprend par un client DASH les étapes consistant à :
- obtenir le fichier de manifeste à partir d'une adresse contenue dans la page Web, ledit fichier de manifeste décrivant une pluralité de Représentations, chaque Représentation décrivant des propriétés d'une version correspondante de l'élément vidéo ;
- construire une représentation en mémoire interne du fichier de manifeste obtenu en :
∘ déterminant à partir d'une annotation associée à l'élément vidéo incorporé dans la page Web, l'utilisation attendue dudit élément vidéo, chaque utilisation attendue étant associée à un ensemble de contraintes comprenant au moins des bornes sur un débit binaire approprié et un taux de trame ;
∘ obtenant l'ensemble de contraintes associé à chaque utilisation attendue ; et
∘ annotant la représentation en mémoire interne du fichier de manifeste en indiquant, pour chaque Représentation de l'élément vidéo, sa conformité avec lesdites contraintes associées à l'utilisation attendue déterminée ;
- déterminer un sous-ensemble de Représentations parmi les Représentations de la représentation en mémoire interne qui est conforme à l'utilisation attendue dudit élément vidéo ; et
- diffuser en continu des données vidéo associées à une Représentation du sous-ensemble.

2. Procédé selon la revendication 1, comprenant en outre l'étape consistant à :
- initialiser un module logique d'adaptation configuré pour prendre en charge la diffusion en continu de données vidéo de l'élément vidéo, avec des informations représentations de l'utilisation attendue dudit élément vidéo ;
- dans lequel le module logique d'adaptation est configuré pour sélectionner une Représentation parmi le sous-ensemble déterminé.

3. Procédé selon la revendication 2, dans lequel
- un autre élément vidéo est incorporé dans la page Web ;
- la représentation en mémoire interne comprend des Représentations annotées supplémentaires décrivant des propriétés de versions de l'autre élément vidéo ;
- un autre module logique d'adaptation est initialisé pour prendre en charge la diffusion en continu de données vidéo de l'autre élément vidéo.

4. Procédé selon la revendication 1, dans lequel le procédé comprend en outre l'étape consistant à :
- déterminer périodiquement par le module logique d'adaptation, pendant la diffusion en continu, une version dudit élément vidéo à demander pour la diffusion en continu et l'affichage dans le sous-ensemble de versions de données vidéo.

5. Procédé selon l'une quelconque des revendications 1 à 4, dans lequel la diffusion en continu est restreinte à la version d'élément vidéo à diffuser en continu appartenant au sous-ensemble de versions de données vidéo et ayant une exigence de largeur de bande la plus faible lorsqu'au moins une autre fenêtre de la page Web est active.

6. Procédé selon la revendication 1, dans lequel la diffusion en continu est restreinte aux versions d'élément vidéo à diffuser en continu appartenant au sous-ensemble de versions de données vidéo avec une exigence de largeur de bande la plus faible.

7. Procédé selon l'une quelconque des revendications 1 à 6, le procédé comprenant en outre pour construire un second fichier de manifeste à partir de la représentation en mémoire interne annotée du fichier de manifeste l'étape consistant à :
- parser la représentation en mémoire interne annotée du fichier de manifeste pour construire le second fichier de manifeste ; ledit second fichier de manifeste étant annoté en conséquence afin d'identifier pour chaque version de données vidéo l'utilisation attendue associée.

8. Procédé selon la revendication 7, dans lequel l'annotation est insérée comme un nouvel attribut d'un élément AdaptationSet de la description de présentation de média.

9. Procédé selon la revendication 8, dans lequel le second manifeste comprend pour chaque sous-ensemble de versions de données vidéo des valeurs représentatives de priorités d'éléments Representation de la description de présentation de média.

10. Dispositif DASH pour diffuser en continu des données vidéo d'un élément vidéo incorporé dans une page Web, ledit élément vidéo étant décrit dans un fichier de manifeste, dans lequel le dispositif DASH comprend un processeur configuré pour exécuter les étapes consistant à :
- obtenir le fichier de manifeste à partir d'une adresse contenue dans la page Web, ledit fichier de manifeste décrivant une pluralité de Représentations, chaque Représentation décrivant des propriétés d'une version correspondante de l'élément vidéo ;
- construire une représentation en mémoire interne du fichier de manifeste obtenu en :
∘ déterminant à partir d'une annotation associée à l'élément vidéo incorporé dans la page Web, l'utilisation attendue dudit élément vidéo, chaque utilisation attendue étant associée à un ensemble de contraintes comprenant au moins des bornes sur un débit binaire approprié et un taux de trame ;
∘ obtenant l'ensemble de contraintes associé à chaque utilisation attendue ; et
∘ annotant la représentation en mémoire interne du fichier de manifeste en indiquant, pour chaque Représentation de l'élément vidéo, sa conformité avec lesdites contraintes associées à l'utilisation attendue déterminée ;
- déterminer un sous-ensemble de Représentations parmi les Représentations de la représentation en mémoire interne qui est conforme à l'utilisation attendue dudit élément vidéo ; et
- diffuser en continu des données vidéo associées à une Représentation du sous-ensemble.

11. Produit de programme informatique pour un appareil programmable, le produit de programme informatique comprenant une séquence d'instructions pour mettre en œuvre un procédé selon l'une quelconque des revendications 1 à 9, lorsqu'elle est chargée dans et exécutée par l'appareil programmable.

12. Support de stockage lisible par ordinateur stockant des instructions d'un programme informatique pour mettre en œuvre un procédé selon l'une quelconque des revendications 1 à 9.
